# EUROPEAN PATENT SPECIFICATION

(11) **EP 1 707 998 B1**
(45) Date of publication and mention of the grant of the patent: **08.10.2008**
(21) Application number: 05380059.5
(22) Date of filing: 01.04.2005
(51) Int. Cl.: G02B 6/00, B60Q 1/56

(54) **Lighting system with light guide for a license plate**
Beleuchtungssystem mit Lichtleiter für Kraftfahrzeug-Kennzeichen
Système d'éclairage avec guide d'onde pour plaque d'immatriculation

(43) Date of publication of application: 04.10.2006
(73) Proprietor: Maier, S. Coop., 48300 Gernika (ES)
(72) Inventor: Mandaluniz Bilbao, Joseba, 48300 Gernika (ES)
(74) Representative: Urteaga Simarro, José Antonio

(56) References cited:
- EP-A- 1 029 738
- EP-A- 1 055 867
- EP-A- 1 167 869
- DE-A1- 4 122 118
- US-A- 6 097 549
- US-A1- 2002 136 019

## Description

### Technical field

The invention relates to a lighting system for a license plate, vehicle lock zone, or any surface or area belonging or not to a motor vehicle.

### Prior art

The prior art discloses the lighting of license plates, lock zones, glove compartments, ashtrays, sunroof handles, air vents, and motor vehicle zones (mainly interior ones) by traditional lighting systems that comprise the use of incandescent bulbs and other electrically powered light sources. These traditional systems present various disadvantages such as the need to use cables to supply the bulbs, or the relatively short life of the bulbs, and as a result they are gradually being replaced by new technologies that solve these problems. Specifically, the use of incandescent bulbs is being phased out and the use of LEDs adopted as a light source in the aforementioned lighting systems. LEDs, as well having a considerably longer useful life, present a much smaller size, reduced power consumption, greater resistance to vibrations and shocks, and a wider range of colours.

For example, patent ES-2221790-A1, awarded to this applicant, discloses a solution for lighting a motor vehicle license plate based on the use of an LED as a light-emitting source. Said LED emits light onto a light guide or piece of transparent, colourless, thermoplastic material that transports said light and projects it in two points of light situated above the license plate. This solution follows the tendency of eliminating the use of bulbs and cables and incorporating new, more efficient light sources, and it is within this tendency that the technical solution of the present invention is framed.

Document US 2002/013 6019, which is considered to be the closest prior art, discloses all the features of the preamble of claim 1.

### Brief description of the invention

It is an object of this invention to provide a lighting system based on a light source and a light guide in which the light projected onto the license plate or area to be lit is distributed evenly all the way along the entire width and height of said area, and is not projected onto specific points of light.

The light guide of the inventive lighting system comprises a series of reflecting means, redistributing means, and reorienting means that reflect, redistribute, and redirect the rays of light emitted by the light source, these means having been designed in such a way that the difference in the lighting level obtained at the different points of the area to be lit does not exceed a sufficiently low threshold and the lighting can be considered even; that is to say that the inventive light guide does not project light through specific points of light but emits even lighting onto both the total height and the total width of the area, thereby enhancing the final result.

The inventive light guide also comprises a light source reception zone, or zone with a shape and size that adapt to those of the light source so that the light source is surrounded by said reception zone. In this way, the loss of light between the light source and the light guide is reduced, thus enhancing the efficiency of the lighting system.

The light source used in the inventive system shall preferably be an LED, although other embodiments such as a halogen bulb or light are also contemplated. As regards the light guide, this shall preferably be manufactured from a transparent thermoplastic material, generally polycarbonate (PC) or polymethylmethacrylate (PMMA).

### Brief description of the figures

Details of the invention can be seen in the figures attached although said figures do not aim to restrict the scope of the invention:
- Figure 1 shows a front view of the preferred mode of embodiment of the inventive lighting system, situated above the area lit by the system.
- Figure 2 shows a cross-sectional view (according to a cross-section through A-A in Figure 1) of said mode of embodiment and the area lit by the system.
- Figure 3 shows an enlarged perspective of part of an arm of the light guide, in the aforementioned mode of embodiment.
- Figure 4 shows an enlarged perspective of the central part of the light guide for the purpose of visualising the reception zone of the light source, in the aforementioned mode of embodiment.

### Detailed description of the invention

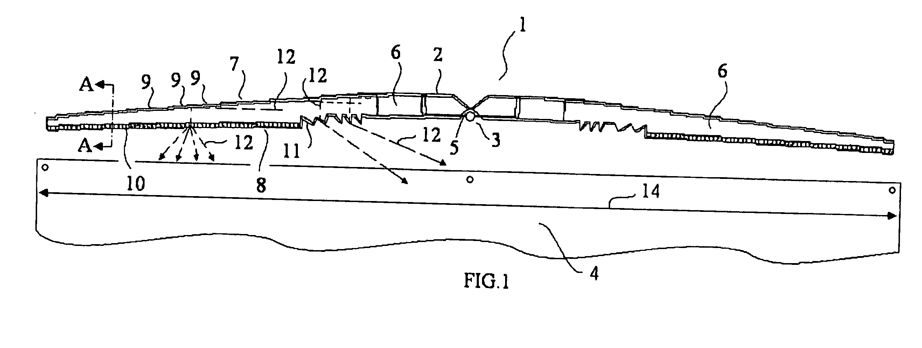

Figure 1 shows the preferred mode of embodiment of the inventive lighting system (1) in which the system (1) comprises as main elements a light source (3) and a light guide (2). The light source (3) is preferably an LED, with said LED powered by a supply source not represented here. The light guide (2) comprises in its central part a reception zone (5), which in the mode of embodiment in the figures is dome-shaped.

The light guide (2) extends from the reception zone (5) and towards the sides in the form of two arms (6), with these arms (6) disposed close to the area (4) and extending over a large part of the width (14) of the area (4). Through these arms (6), the light emitted by the light source (3) is guided towards the area (4).

Each arm (6) presents a largely elongated form, the part of which closest to the area (4) constitutes the light exit area (8) and whose opposite part and furthest from the area (4) can be termed as the opposite zone (7) to said light exit zone (8).

The opposite zone (7) comprises a series of reflecting means (9) or variations in its geometry by means of which the rays of light (12) originating from the light source (3) are reflected towards the light exit zone (8). Said reflecting means (9) possess suitable characteristics so that each reflecting means (9) reflects the appropriate amount of light to enable the light directed towards the light exit zone (8) of the arm (6) to be approximately constant all the way along the arm (6). In the mode of embodiment in the figure, the reflecting means (9) are made in the form of steps, as can be seen more clearly in further figures.

The light exit zone (8) comprises a series of redistributing means (10) to homogenise the emission of light, i.e. to redistribute the rays of light (12) arriving from the opposite zone (7) evenly onto the area (4). In the mode of embodiment in the figure, the redistributing means (10) are a series of undulations formed in the light exit zone (8).

In addition, the mode of embodiment in the figure comprises a series of reorienting means (11) in the form of teeth of varying shapes and sizes, whose function it is to reorient certain rays of light (12) arriving from the opposite zone (7) onto a certain part of the area (4). In the case of the figure, these reorienting means (11) are necessary to correctly illuminate the central zone of the area (4), as the system (1) comprises a light source (3) that emits upwards in the central zone of the light guide (2) and as there is therefore no direct emission of light onto the central zone of the area (4) to be lit.

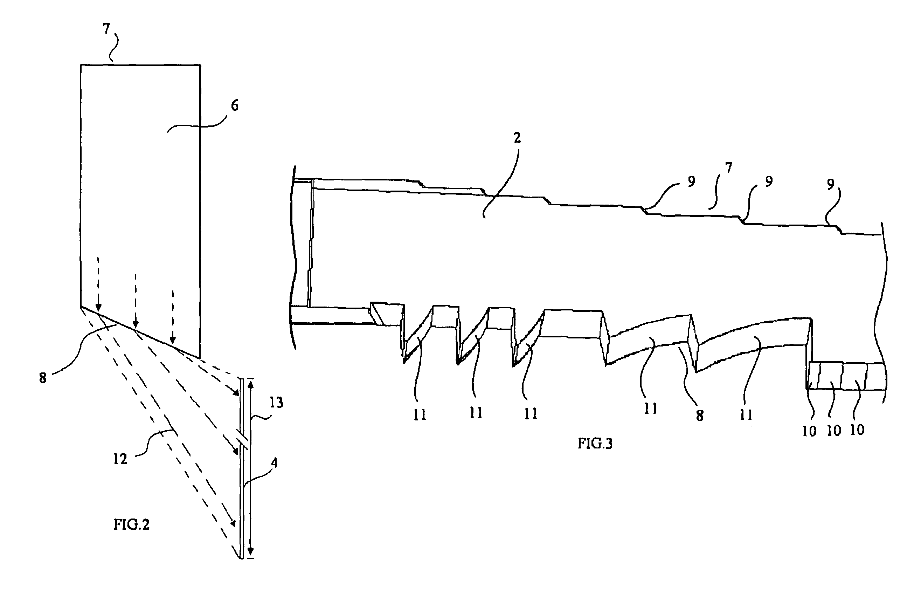

Figure 2 shows a cross-section, according to a cross-section through A-A in Figure 1, of the arm (6). As the figure shows, the light exit zone (8) is inclined in relation to the opposite zone (7). In this way the rays of light (12) originating from the opposite zone (7) are refracted through the light exit zone (8) in such a way that they evenly light up the entire height (13) of the area (4).

Figure 3 shows an enlarged view of part of one of the arms (6) in which the reorienting means (11) or teeth are situated in addition to the reflecting means (9) or steps and the redistributing means (10) or undulations.

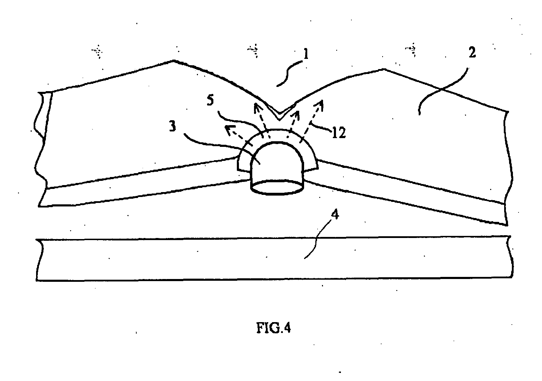

Figure 4 shows how the dome-shaped reception zone (5) of the present mode of embodiment is adapted to the shape of the LED or light source (3), and in this way efficiently collects all the rays of light (12) emitted by said light source (3). This figure shows that the reception zone (5) is formed in the bottom part of the light guide (2), or in the part of the light guide (2) closest to the area (4), with said part closest to the area (4) the same as in which the light exit zone (8) of each arm (6) is situated. In this case and according to the arrangement of the figure, the light source (3) emits light upwards, which means that the reorienting means (11), not visible in the figure, are needed to light up the central zone of the area (4).

Various modes of embodiment of the invention are contemplated, in addition to those disclosed, with regard to certain aspects of the system (1).

It is contemplated that the system (1) is not situated above the area (4) to be lit, as Figure 1 shows, but to one side of the area (4) or beneath the area (4).

It is also contemplated that the system (1) can comprise more than one light source (3) and, similarly, the light guide (2) can comprise more than one reception zone (5). The reception zones (5) and their corresponding light sources (3) may be disposed in different zones of the light guide (2), separated from each other, and even on the sides of the light guide (2), and in such a case the sections of the light guide (2) extending from the various reception zones (5) towards the periphery of the system (1) and/or connecting the reception zones (5) together will be considered as arms (6).

A system (1) with the innovative characteristics of the invention is also contemplated, where the system (1) comprises a single light source (3) situated not in the central zone of the light guide (2) but in any zone, even on a side or flank of the aforementioned light guide (2). In the event that the light source (3) is situated on a side, the light guide (2) will preferably comprise a single arm (6).

As regards the specific embodiment of the light guide (2), it is contemplated that the redistributing means (10) can be made in the form of a rough texture or finish in the light exit zone (8). A finish of this type provides a diffuse light at the exit of the arms (6), which may be useful in certain applications when, for example, there is not so much of a need to comply with strict light intensity requirements in the area (4) as to project a diffuse, pleasant light onto said area (4).

Although the light guide (2) is preferably colourless, the invention can comprise a completely or partly coloured light guide in order to project coloured light onto the area (4). To achieve this, at least one part of the light exit zone (8) of at least one arm (6) is coloured so that the rays of light (12) crossing said part are coloured.

## Claims

1. Lighting system (1) for lighting an area (4), the system (1) comprising at least one light source (3) that emits rays of light (12), and a light guide (2) to guide the rays of light (12) from the light source (3) towards the area (4), where the light guide (2) is made of a transparent material and comprises at least one reception zone (5) or light guide zone (2) upon which the rays of light (12) emitted by the light source (3) fall directly, and at least one arm (6) or zone of the guide that distributes the rays of light (12) originating from the reception zone (5), wherein the arm (6) presents a substantially elongated form, is disposed along and close to the area (4), and comprises a light exit zone (8) and an opposite zone (7) to said light exit zone (8), the system (1) being **characterised in that:**
the reception zone (5) is formed in the part of the light guide (2) closest to the area (4), said part closest to the area (4) being the same part in which the light exit zone (8) of each arm (6) is situated,
- the opposite zone (7) comprises at least one reflecting means (9) to reflect the rays of light (12) originating from the light source (3) towards the light exit zone (8),
- the light exit zone (8) comprises at least one redistributing means (10) to evenly redistribute the rays of light (12) arriving from the opposite zone (7) onto the area (4), and at least one reorienting means (11) to reorient certain rays of light (12) arriving from the opposite zone (7) onto a certain part of the area (4).

2. Lighting system (1) in accordance with claim 1, **characterised in that** the reorienting means (11) are teeth formed in the light exit zone (8).

3. Lighting system (1) in accordance with claim 1, **characterised in that** the redistributing means (10) are undulations formed in the light exit zone (8).

4. Lighting system (1) in accordance with claim 1, **characterised in that** the redistributing means (10) are a rough texture or finish in the light exit zone (8).

5. Lighting system (1) in accordance with claim 1, **characterised in that** the reflecting means (9) are steps formed in the opposite zone (7).

6. Lighting system (1) in accordance with claim 1, **characterised in that** the shape of the reception zone (5) is adapted to the shape of the light source (3).

7. Lighting system (1) in accordance with claim 1, **characterised in that** the light exit zone (8) is inclined in relation to the opposite zone (7) so that the rays of light (12) originating from the opposite zone (7) are refracted through the light exit zone (8) in such a way that they fall on the entire height (13) of the area (4).

8. Lighting system (1) in accordance with claim 1, **characterised in that** at least one part of the light exit zone (8) of at least one arm (6) is coloured so that the rays of light (12) crossing said part are coloured.

9. Lighting system (1) in accordance with claim 1, **characterised in that** the light source (3) and the reception zone (5) are situated substantially in the centre of the system (1), with the system (1) comprising two arms (6) that extend towards both sides of said reception zone (5).

## Patentansprüche

1. Beleuchtungssystem (1) zur Beleuchtung einer Fläche(4), bei dem das System mindestens eine Lichtquelle (3) umfasst, die Lichtstrahlen (12) emittiert, sowie einen Lichtleiter (2), um die Lichtstrahlen (12) von der Lichtquelle (3) zu der Fläche (4) hin zu leiten, wobei der Lichtleiter (2) aus einem transparenten Material besteht und mindestens einen Aufnahmebereich (5) oder Leitungsbereich (2) für das Licht umfasst, auf welche die Lichtstrahlen (12), die von der Lichtquelle (3) emittiert werden, direkt einfallen, sowie mindestens ein Arm (6) oder Leitungsbereich, welcher die Lichtsrahlen (12), die von dem Aufnahmebereich (5) stammen, verteilt, bei dem der Arm (6) eine im Wesentlichen längliche Form aufweist, entlang und nahe der Fläche (4) angeordnet ist, sowie einen Ausgangsbereich (8) und einem besagtem Ausgangsbereich (8) für das Licht gegenüber liegenden Bereich (7) umfasst. Das System (1) ist dabei durch Folgendes charakterisiert:
- der Aufnahmebereich (5) ist in dem Teil des Lichtleiters (2), welcher der Fläche (4) am nächsten liegt, so geformt, dass besagter der Fläche (4) am nächsten liegende Teil der gleiche Teil ist, in dem sich der Ausgangsbereich (8) für das Licht jedes einzelnen Arms (6) befindet,
- der gegenüber liegende Bereich (7) umfasst mindestens ein reflektierendes Hilfsmittel (9), um die Lichtstrahlen (12), die von der Lichtquelle (3) stammen, zu dem Ausgangsbereich des Lichts (8) hin zu reflektieren,
- der Ausgangsbereich des Lichts (8) umfasst mindestens ein umverteilendes Hilfsmittel (10), um die Lichstrahlen (12), die von dem gegenüber liegenden Bereich (7) aus eintreffen, gleichmäßig auf die Fläche (4) umzuverteilen, sowie mindestens ein umorientierendes Hilfsmittel (11), um bestimmte Lichstrahlen (12), die von dem gegenüber liegenden Bereich (7) aus eintreffen, auf einen bestimmten Teil der Fläche (4) umzuorientieren.

2. Beleuchtungssystem (1) in Übereinstimmung mit Anspruch 1, **dadurch gekennzeichnet, dass** die umorientierenden Hilfsmittel (11) aus Zähnen bestehen, die im Ausgangsbereich des Lichts (8) gebildet werden.

3. Beleuchtungssystem (1) in Übereinstimmung mit Anspruch 1, **dadurch gekennzeichnet, dass** die umverteilenden Hilfsmittel (10) aus Wellenlinien bestehen, die im Ausgangsbereich des Lichts (8) gebildet werden.

4. Beleuchtungssystem (1) in Übereinstimmung mit Anspruch 1, **dadurch gekennzeichnet, dass** die umverteilenden Hilfsmittel (10) aus einer rauen Struktur oder Oberfläche im Ausgangsbereich des Lichts (8) bestehen.

5. Beleuchtungssystem (1) in Übereinstimmung mit Anspruch 1, **dadurch gekennzeichnet, dass** die reflektierenden Hilfsmittel (9) aus Stufen bestehen, die im gegenüber liegenden Bereich (7) gebildet werden.

6. Beleuchtungssystem (1) in Übereinstimmung mit Anspruch 1, **dadurch gekennzeichnet, dass** die Form des Aufnahmebereichs (5) an die Form der Lichtquelle (3) angepasst ist.

7. Beleuchtungssystem (1) in Übereinstimmung mit Anspruch 1, **dadurch gekennzeichnet, dass** der Ausgangebereich des Lichts (8) bezüglich des gegenüber liegenden Bereichs (7) geneigt ist, so dass die Lichtstahlen (12), die von dem gegenüber liegenden Bereich (7) stammen, durch den Ausgangebereich des Lichts (8) auf solche Weise abgelenkt werden, dass sie auf die gesamte Höhe (13) der Fläche (4) einfallen.

8. Beleuchtungssystem (1) in Übereinstimmung mit Anspruch 1, **dadurch gekennzeichnet, dass** mindestens ein Teil des Ausgangebereichs des Lichts (8) von mindestens einem Arm (6) farbig ist, so das die Lichtstrahlen (12), die besagten Teil durchqueren, farbig sind.

9. Beleuchtungssystem (1) in Übereinstimmung mit Anspruch 1, **dadurch gekennzeichnet, dass** sich die Lichtquelle (3) und der Aufnahmebereich (5) im Wesentlichen im Zentrum des Systems (1) befindet, wobei das System (1) zwei Arme (6) umfasst, die sich zu beiden Seiten besagten Aufnahmebereichs (5) hin erstrecken.

## Revendications

1. Le système d'éclairage (1) permettant d'éclairer une surface (4), le système (1) comprenant au moins une source de lumière (3) émettant des rayons lumineux (12), et un guide solaire (2) permettant de guider les rayons lumineux (12) de la source lumineuse (3) vers la surface (4), où le guide lumineux (2) est constitué d'un matériau transparent et comprenant au moins une zone de réception (5) ou une zone de guidage lumineux (2) sur laquelle les rayons (12) émis par la source de lumière (3) sont directement projetés, et au moins un bras (6) ou un espace du guide qui diffuse ces rayons lumineux (12) émis depuis la zone de réception (5), dans laquelle le bras (6) présente une forme considérablement allongée, est disposé tout au long et à proximité de la surface (4), et comprend une issue lumineuse (8) et une zone opposée (7) à cette même issue lumineuse (8), le système (1) présentant les caractéristiques suivantes:
- l'aire de réception (5) se forme dans une partie du système de guidage lumineux (2) le plus proche de la surface (4), cette même partie la plus proche de la surface (4) étant située au même endroit que celle où se trouve l'issue de sortie lumineuse (8) de chaque bras (6),
- la zone opposée (7) comprend au moins une source de réflexion (9) permettant de réfléchir les rayons lumineux (12) émis depuis la source lumineuse (3) vers l'issue de sortie lumineuse (8),
- l'issue de sortie lumineuse (8) comprend au moins un moyen de redistribution (10) permettant de répartir uniformément les rayons lumineux (12) arrivant de la zone opposée (7) sur la surface (4), et au moins un moyen de réorientation (11) permettant de réorienter certains rayons lumineux (12) arrivant de la zone opposée (7) sur une certaine partie de la surface (4).

2. Le système d'éclairage (1), conformément à la revendication 1, se **caractérise par le fait que** les moyens de réorientation (11) sont des dents formées dans l'enceinte de l'issue lumineuse (8).

3. Le système d'éclairage (1), conformément à la revendication 1, est **caractérisé par le fait que** les moyens de rediffusion (10) sont des ondulations formées dans l'issue de sortie lumineuse (8).

4. Le système d'éclairage (1), conformément à la revendication 1, est **caractérisé par le fait que** les moyens de rediffusion (10) sont constitués par une structure rugueuse ou s'achèvent dans l'issue lumineuse (8).

5. Le système d'éclairage (1), en conformité avec la revendication 1, se **caractérise par le fait que** les moyens de réflexion (9) sont des escaliers formés dans la zone opposée (7).

6. Le système d'éclairage (1), conformément à la revendication 1, est **caractérisé par le fait que** la forme de l'aire de réception (5) est adaptée à la forme de la source de lumière (3).

7. Le système d'éclairage (1), conformément à la revendication 1, est **caractérisé par le fait que** l'issue lumineuse (8) est inclinée par rapport à la zone opposée (7), de telle sorte que les rayons lumineux (12) provenant de la zone opposée (7) se réfractent par l'intermédiaire de l'issue lumineuse (8), de façon à ce qu'ils tombent sur la hauteur intégrale (13) de la surface (4).

8. Le système d'éclairage (1), conformément à la revendication 1, est **caractérisé par le fait qu'**au moins une partie de l'issue lumineuse (8) d'au moins un bras (6) est colorée, de telle sorte que les rayons lumineux (12) qui traversent cette même section sont colorés.

9. Le système d'éclairage (1), conformément à la revendication 1, se **caractérise par le fait que** la source lumineuse (3) et l'aire de réception (5) sont situés essentiellement au centre du système (1), le système (1) comprenant deux bras (6) qui s'étendent vers les deux côtés de cette même aire de réception (5).
